# DEMANDE DE BREVET EUROPEEN

(11) **EP 4 750 069 A1**
(43) Date de publication de la demande: **27.05.2026**
(21) Numéro de dépôt: 25217776.1
(22) Date de dépôt: 21.11.2025
(51) Int. Cl.: H04N 21/61, H04W 4/06

(54) **PROCÉDÉ ET STATION DE BASE POUR LA TRANSMISSION OPTIMISÉE DE CONTENUS AUDIO-VISUELS**

(30) Priorité: 21.11.2024 FR 2412763
(71) Demandeur: Orange, 92130 Issy-les-Moulineaux (FR)
(72) Inventeur: RIVOALEN, Mathieu, 92326 CHATILLON CEDEX (FR); MARCHAND, Hervé, 92326 CHATILLON CEDEX (FR)
(74) Mandataire: Regimbeau

(57) **Abrégé**

Procédé de transmission d'un contenu audio-visuel disponible sur un serveur de contenu (10) vers un ensemble de terminaux de communication (30-1, 30-2, 30-3) à travers un réseau cellulaire de télécommunication mobile, comprenant :
- détection par une station de base (20) qu'au moins deux terminaux de communication servis par ladite station de base consomment un même contenu audio-visuel ;
- transmission d'une requête pour ledit contenu audio-visuel par ladite station de base audit serveur de contenu ;
- diffusion dudit contenu audio-visuel vers lesdits au moins deux terminaux de communication.

## Description

### DOMAINE TECHNIQUE

Le domaine est celui de la transmission de contenus audio- vidéos depuis un serveur de contenus vers des terminaux de communication au travers d'un réseau cellulaire de télécommunication mobile.

La proposition concerne plus particulièrement un procédé pour une telle transmission ainsi qu'une station de base adaptée pour la mise en œuvre de ce procédé.

La consommation des contenus audio- vidéos se réalise de plus en plus en mobilité, à partir terminaux tels des téléphones portables de type « smartphones », de tablettes numériques ou d'ordinateurs portables, connectés à un réseau mobile cellulaire. Les utilisateurs peuvent ainsi accéder à ces contenus à tout moment et en tout lieux, qu'ils soient en diffusion continue (ou « *streaming* » en anglais) ou en téléchargement ou à la demande (ou VoD pour « *Video on Demand* » en anglais. Par exemple, de nombreux utilisateurs peuvent accéder à des contenus audiovisuels, ou audio-vidéos, dans les transports en commun, mais également pendant des pauses en milieu scolaire, professionnel, à la maison, dans des lieux publics, etc.

Cette évolution des usages fait porter une charge grandissante sur le réseau cellulaire 3G/4G/5G. Les pics de trafic sur certains contenus peuvent alors poser des problèmes pour les infrastructures de ce réseau cellulaire. Par exemple, l'effet d'un pic de trafic sur une cellule peut la saturer et impacter sérieusement la capacité des terminaux servi par la station de base associée à cette cellule d'accéder au réseau cellulaire.

Dans une telle situation en effet, la station de base voit transiter les flux de données relatifs au contenu audio-visuel demandé entre le serveur de contenu et l'ensemble des terminaux, chaque flux étant un flux transmis en unicast.

Un tel contenu peut typiquement être un contenu audio-vidéo en diffusion continue, ou « direct ». Il peut par exemple s'agir d'un match de football important, ou tout autre contenu à fort audimat.

Une telle situation n'est donc pas acceptable pour les utilisateurs, et il existe par conséquent un besoin d'améliorer les propositions actuelles de l'état de la technique

### EXPOSÉ DE L'INVENTION

L'invention vise à améliorer la situation de l'état de la technique. En particulier, il est proposé un procédé et une station de base permettant une transmission optimisée d'un contenu audio-visuel, notamment correspondant à un pic de trafic, vers des terminaux de communication consommateur.

Plus précisément, il est proposé un procédé de transmission d'un contenu audio-visuel disponible sur un serveur de contenu vers un ensemble de terminaux de communication à travers un réseau cellulaire de télécommunication mobile, comprenant :
- détection par une station de base qu'au moins deux terminaux de communication servis par ladite station de base consomment un même contenu audio-visuel ;
- transmission d'une requête pour ledit contenu audio-visuel par ladite station de base audit serveur de contenu ;
- diffusion dudit contenu audio-visuel vers lesdits au moins deux terminaux de communication.

Il est ainsi proposé que la station de base devienne un client, ou destinataire, d'une transmission du contenu audio-visuel demandé depuis le serveur de contenu, à la place des terminaux finaux. Ce déport permet de limiter considérablement le trafic descendant vers les stations de base lorsque celles-ci sont sollicités par un pic de demandes de la part des terminaux servis.

Il est particulièrement intéressant que le procédé ne prévoie pas d'éléments de réseau supplémentaire et puisse, au contraire, être mis en œuvre au sein des stations de base déjà déployées sur le terrain, de sorte qu'une mise à jour logicielle seule puisse permettre la mise en œuvre du procédé proposé.

En outre, ce procédé peut permettre une décision à l'échelle de la station de base : celle-ci peut détecter une situation parmi les terminaux connectés qui justifie la transmission d'une requête pour le contenu demandé par la station de base. Cette granularité fine permet une meilleure adaptation aux fluctuations de trafic dans un réseau mobile et aux hand-over.

Suivant des modes de réalisation préférés, l'invention comprend une ou plusieurs des caractéristiques suivantes qui peuvent être utilisées séparément ou en combinaison partielle entre elles ou en combinaison totale entre elles :
- La station de base détermine si lesdits au moins deux terminaux de communication consomment ledit contenu audio-visuel dans une même qualité afin de transmettre ladite requête. Le procédé peut alors prendre compte les qualités requises par les terminaux pour mutualiser la charge du lien entre le serveur de contenu et la station de base.
- La diffusion vers lesdits au moins deux terminaux de communication est une multidiffusion au sein de la cellule associée à ladite station de base. La station de base peut ainsi également réduire sa charge propre en se limitant en une seule diffusion vers l'ensemble des terminaux récipiendaires, sans avoir à gérer des liens pair-à-pair (1-1).
- Une pluralité de stations de base multidiffuse ledit contenu audio-visuel sur une même fréquence et en synchronisme temporel. Comme il sera vu plus loin, cette option permet d'améliorer la qualité de service pour les terminaux en mobilité d'une cellule à une autre et d'éviter les interférences, notamment en bord de cellule.
- La multidiffusion comprend une constitution d'un réseau à fréquence unique.
- Le contenu audio-visuel est transmis en mode multicast depuis ledit serveur de contenu vers ladite pluralité de stations de base. Cette option permet un gain supplémentaire en limitant la bande passante de l'acheminement d'un même contenu vers une pluralité de stations de base.
- La station de base met en œuvre un contrôle d'accès à ladite multidiffusion par lesdits terminaux de communication. Cette option permet de gérer l'accès aux contenus, notamment dans le cas où une multidiffusion pourrait le rendre accessible à tous.
- Le contenu est un contenu correspondant à un pic de trafic, par exemple un contenu diffusé en continu. Toutefois, le procédé peut s'appliquer à différentes situations, et non nécessairement pour des contenus correspondant à des pics de trafic.

Un autre aspect de l'invention concerne un programme d'ordinateur comportant des instructions pour mettre en œuvre un procédé tel que précédemment décrit lorsqu'il est exécuté par un processeur.

Un autre aspect concerne une station de base pour la transmission d'un contenu audio-visuel disponible sur un serveur de contenu vers un ensemble de terminaux de communication à travers un réseau cellulaire de télécommunication mobile, comprenant un processeur configuré pour :
- détecter qu'au moins deux terminaux de communication servis par ladite station de base consomment un même contenu audio-visuel ;
- transmettre une requête pour ledit contenu audio-visuel audit serveur de contenu ;
- diffuser ledit contenu audio-visuel, vers lesdits au moins deux terminaux de communication.

Un autre aspect concerne un réseau de communication comportant au moins une station de base tel que précédemment décrit. Selon des modes de réalisation, plusieurs stations de base peuvent appartenir à un même arbre de distribution multicast du contenu audio-visuel.

Un autre aspect concerne un programme d'ordinateur apte à être mis en œuvre sur une station de base, le programme comprenant des instructions de code qui, lorsque ces instructions sont exécutées par un processeur, conduisent celui-ci à mettre en œuvre au moins certaines des étapes du procédé précédemment décrit.

Un autre aspect concerne un support de données sur lequel a été mémorisé au moins une série d'instructions de code de programme pour l'exécution d'au moins certaines des étapes d'un procédé tel que précédemment défini.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre un exemple simplifié d'un réseau de diffusion de contenu ;
- la figure 2 illustre un exemple simplifié d'un réseau de diffusion d'un contenu audio-visuel, selon un mode de réalisation ;
- la figure 3 illustre un exemple simplifié d'un réseau de diffusion comportant deux stations de base, selon un mode de réalisation.

### EXPOSÉ DÉTAILLÉ DE MODES DE RÉALISATION PARTICULIERS

Le procédé décrit peut s'appliquer à différentes technologies de réseaux cellulaires de télécommunication mobile.

Ce type de réseau vise à permettre l'accès à des réseaux de données à des terminaux de communication en mobilité en leur permettant de se connecter dynamiquement à des stations de base réparties sur un territoire au moyen d'un protocole de radiocommunication. Chaque station de base est associée à une cellule formant une sous-partie de ce territoire couverte par une (ou plusieurs) antenne-relais. Les stations de base sont par ailleurs connectées entre elles par un réseau dit « *backhaul* », en général au moyen de fibres optiques ou d'autres liaisons filaires à haut-débit.

Un réseau de télécommunication mobile constitue un réseau d'accès aux différents réseaux de données interconnectés à travers le monde, communément et collectivement appelés Internet.

Ces réseaux cellulaires de télécommunication mobile sont normalisés par des organismes comme l'ITU (*International Telecommunication Union*) et le 3GPP (*3rd Generation Partnership Project*) et sont désignés selon la génération 3G, 4G, 5G...

La plupart des terminaux de communication sont compatibles avec les différentes générations de normes de télécommunication mobile. Ces terminaux peuvent être des téléphones mobiles (le plus souvent de type « *smartphone* »), des tablettes numériques, mais aussi des ordinateurs (notamment portables), des objets connectés, etc. Dans le cadre de proposition décrite, le terminal de communication peut se caractériser uniquement par sa capacité à se connecter à une cellule d'un réseau mobile et à recevoir un contenu audio-visuel.

Le contenu audio-visuel peut être compris au sens le plus large, c'est-à-dire comprenant les contenus vidéos comportant au moins une piste audio, mais aussi des contenus vidéos sans partie audio, ou les contenus purement audios. A titre d'exemples illustratifs, ces contenus audio-visuels peuvent comprendre les émissions télévisuelles, les films, les diffusions d'événements sportifs ou, plus généralement de loisir, etc.

Les contenus sont généralement disponibles auprès de serveurs de contenu, en charge de les diffuser au sein d'un réseau de diffusion de contenu CDN (pour « *Content Delivery Network* » en anglais) qui forme, en quelque sorte, une surcouche (ou « *overlay* » en anglais) du réseau de télécommunication sous-jacent, y compris du réseau cellulaire de téléphonie mobile assurant la liaison descendante vers les terminaux de télécommunication.

Au sein d'un réseau CDN, un serveur de contenu peut rendre disponible un même contenu selon différentes qualités.

En général et actuellement, les qualités courantes comprennent :
- Très basse qualité : souvent adaptée pour les utilisateurs avec des connexions Internet très lentes ou instables, cette qualité peut avoir une résolution de 240p et un débit de 200 kbps.
- Basse qualité : cette qualité convient pour les connexions Internet plus stables mais encore relativement lentes, avec une résolution de 360p et un débit de 400-700 kbps.
- Qualité standard : cette qualité convient pour la plupart des connexions Internet, avec une résolution de 480p ou 720p et un débit de 800 kbps à 2 Mbps.
- Haute qualité : cette qualité convient pour les connexions Internet rapides et fiables, avec une résolution de 1080p et un débit de 2-5 Mbps.
- Très haute qualité : cette qualité convient pour les connexions Internet très rapides, avec une résolution de 4K et un débit de plus de 10 Mbps.

En général, le serveur de contenu public un fichier « *manifest* » recensant les différentes qualités disponibles.

Ce même fichier indique élément le découpage du contenu en segments téléchargeables, ou « *chunk* » en anglais, pour le contenu. Ainsi, le terminal de communication peut, au fil de l'eau, adresser des requêtes au serveur de contenu pour récupérer le segment souhaité, dans la qualité souhaitée, celle-ci pouvant évoluer au fil du temps notamment du fait des conditions de transmission et/ou de la charge du terminal.

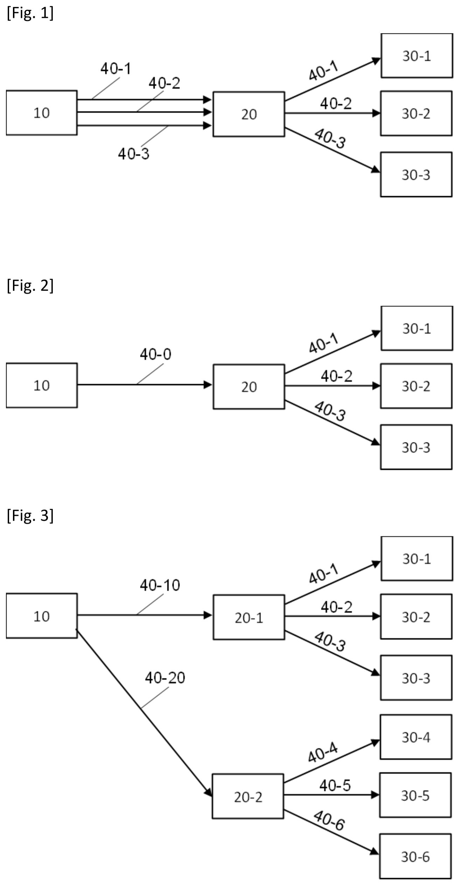

La **figure 1** illustre un exemple simplifié d'un tel réseau de diffusion de contenu.

Trois terminaux 30-1, 30-2, 30-3 ont demandé un même contenu auprès d'un même serveur de contenu 10. Ce dernier transmet donc 3 flux de segments relatifs à ce contenu, respectivement 40-1, 40-2, 40-3, aux terminaux. On suppose par ailleurs que ces flux correspondent à une même qualité pour l'ensemble des trois terminaux.

Ces flux de segments transitent vers la station de base 20, celle-ci étant notamment responsable du passage du monde filaire (liaison serveur de contenu / station de base) au monde radio (liaison station de base / terminal). Dans le cadre d'un réseau 3G/4G/5G, la station de base 20 peut être également nommée BTS (pour « *Base Transceiver Station* » en anglais), NodeB, ou gNodeB. Par la suite, nous adopterons le terme « station de base » pour couvrir ces différents types d'équipements et de fonctions, pouvant varier selon les normes et les documents normatifs.

Il apparait dans cet exemple que le réseau amont, liant le serveur de contenu 10 à la station de base 20, est chargé par la transmission des flux 40-1, 40-2, 40-3, alors que ceux-ci sont identiques puisque, dans l'exemple, correspondant au même contenu dans la même qualité.

On comprend que lorsque le nombre de terminaux recevant un même contenu dans une même qualité est important, le flux de segments de contenu identiques est d'autant dupliqué, générant une surcharge du réseau de télécommunication et de la station de base. Dans le cas de pic de trafic, on peut alors assister à des saturations des infrastructures réseaux impactant la qualité de service pour les utilisateurs. Dans des cas extrêmes, certains utilisateurs peuvent même perdre l'accès au réseau de télécommunication mobile.

Selon l'état de la technique, le trafic lié à la transmission des contenus audio-visuels n'est pas analysé par la station de base dans la mesure où le réseau de diffusion de contenu (CDN) forme une surcouche au réseau de transport.

Le procédé proposé vise à détecter une telle situation et à y remédier. Plus précisément, il vise à tirer profit des capacités des stations de base pour éviter son engorgement et la saturation du lien descendant vers elle. Il est proposé d'impliquer les stations de base dans la gestion de la transmission des contenus audio-visuels depuis le serveur de contenus vers les terminaux ; autrement dit, les stations de bases deviennent des éléments du réseau de diffusion de contenus CDN.

En particulier, les stations de base peuvent être considérées comme incorporant des fonctionnalités de nanoCDN.

D'une façon générale, une station de base comprend au moins une interface de communication radio, et des antennes permettant la communication vers les terminaux de communication, une interface vers le réseau filaire dorsal (ou « backbone » en anglais) permettant d'interconnecter les stations de base avec d'autres éléments de communication et notamment des serveurs contenus 10, et des moyens de traitement incluant un ou plusieurs processeurs, des mémoires et des circuits spécialisés.

La **figure 2** illustre un exemple simplifié d'un réseau de diffusion d'un contenu audio-visuel selon un mode de réalisation proposé, comportant un serveur de contenu 10, une station de base 20 et trois terminaux de communication 30-1, 30-2, 30-3 servis par cette station de base, c'est-à-dire couverts par la cellule associée à cette station de base.

Le contenu audio-visuel concerné peut correspondre à un pic de trafic, mais le procédé proposé peut être mis en œuvre pour des contenus audio-visuels répondants à différents critères, et même pour tout contenu audio-visuel.

La station de base 20 est adaptée pour détecter qu'au moins deux terminaux de communication (servis par elle-même) consomment un même contenu audio-visuel.

Selon un mode de réalisation, la station de base détermine si ces au moins deux terminaux de communication consomment ce contenu audio-visuel dans une même qualité. En effet, comme il a été vu précédemment, un même contenu audio-visuel peut être disponible dans différentes qualités, ce qui permet une adaptation aux conditions de transmission et de production par les terminaux de communication effectuant la lecture de ce contenu.

S'il est détecté qu'au moins deux terminaux consomment, c'est-à-dire reçoivent, un même contenu audio-visuel, et, selon un mode de réalisation, dans la même qualité, alors la station de base 20 peut déclencher un traitement particulier.

Ce traitement particulier comprend, pour la station de base, à basculer dans un fonctionnement où elle agit en tant que nanoCND pour les terminaux de communication en question, et en tant que client pour le serveur de contenu 10.

Pour ce faire, la station de base 20 transmet une requête pour le contenu audio-visuel au serveur de contenu. De la sorte, la station de base devient un client du serveur de contenu. La requête peut contenir également la qualité désirée.

S'il existe plusieurs groupes de plus de 2 terminaux de communication pour un même contenu audio-visuel mais chacun selon une qualité distincte, alors la station de base 20 peut transmettre une requête au serveur de contenu pour chacune de ces qualités.

Ainsi, le serveur de contenu 10 transmets le contenu audio-visuel 40-0 à la station de base 20 (dans la qualité demandée par cette dernière).

La station de base 20 peut alors diffuser ce contenu audio-visuel vers le ou les terminaux de communication 30-1, 30-2, 30-3 ayant précédemment requis ce contenu audio-visuel, le cas échéant dans cette même résolution.

Ainsi, en agissant comme « point intermédiaire » de type nanoCDN, les transmissions des flux de segments correspondant à ce contenu audio-visuel sont mutualisées sur la liaison serveur de contenu 10 vers station de base : on voit sur la figure 2 une unique transmission 40-0 alors que sur la figure 1, trois transmission 40-1, 40-2, 40-3 étaient représentées.

Il en résulte une économie importante de la bande-passante et des ressources du réseau de communication et de la station de base : même un pic de trafic important sur ce contenu audio-visuel peut n'avoir qu'un impact très limité du fait de cette mutualisation, ce qui permet d'éviter, ou tout du moins de limiter, les situations d'engorgement et saturation de cellules.

La liaison entre la station de base 20 et les terminaux de communication est locale. Sur la figure 2, trois transmissions sont représentées 40-1, 40-2, 40-3 vers, respectivement, les trois terminaux de communication 30-1, 30-2, 30-3. Cette diffusion peut être mise en œuvre de différentes façons.

Notamment, cette diffusion peut être prévue pour éviter l'engorgement et la saturation de la cellule dans le plan radio.

Selon un mode de réalisation, la diffusion vers les terminaux de communication est une multidiffusion, ou « *broadcasting* » en anglais au sein de la cellule associée à la station de base 20. Ce type de diffusion ne vise pas un terminal de communication en particulier mais est accessible, théoriquement, à tout terminal dans la cellule associée à la station de base 20. Autrement dit, une seule émission par la station de base permet d'atteindre un grand nombre (théoriquement une infinité) de terminaux de communication.

Ce mode de réalisation permet donc de soulager grandement la charge pour la station de base 20 et permet d'éviter la saturation de la cellule radio.

Selon un mode de réalisation, un contrôle d'accès peut être mis en place par la station de base afin de restreindre l'accès au contenu multidiffusé aux terminaux de communication concernés. Les terminaux de communication concernés peuvent être ceux qui étaient déjà en train de consommer ce contenu audio-visuel (on suppose alors que l'éventuel contrôle d'accès a été effectué préalablement par le serveur de contenu 10).

Ce contrôle d'accès peut être basé sur l'identifiant du terminal de communication (identifiant IMEI/IMSI). L'IMEI (« *International Mobile Equipment Identity* ») est un numéro unique attribué à chaque appareil mobile (téléphone, tablette, etc.) qui permet de l'identifier de manière unique sur un réseau mobile. L'IMSI (« *International Mobile Subscriber Identity* ») est un identifiant unique associé à un abonné (utilisateur) mobile. Il est stocké dans la carte SIM de l'utilisateur et permet d'identifier l'abonné sur le réseau mobile.

Le contrôle d'accès peut être basé également sur une gestion de droits, par exemple de type DRM (pour « *Digital Right Management* »)*.* Des données sur les droits d'accès, de type DRM, peuvent être associés aux contenus multidiffusés, de sorte que seuls les terminaux satisfaisants aux droits d'accès peuvent effectivement décoder les flux de données qu'ils reçoivent en broadcast.

Dans le cas où un même contenu audio-visuel est consommé par plusieurs groupes de terminaux, chacun avec une qualité distincte, le contenu peut être requis selon ces différentes qualités auprès du serveur de contenu par la station de base. Celle-ci peut alors diffuser ce contenu selon ces différentes qualités au sein de la cellule. Selon un mode de réalisation, donc, la station de base effectue une multidiffusion par qualité requise du contenu audio-visuel.

Un pic de trafic sur un contenu audio-visuel impacte très généralement non pas une station de base, mais un territoire. Autrement dit, il peut être prévu de mettre en œuvre le procédé qui vient d'être décrit sur un ensemble de stations de base d'un territoire donné, voire pour la totalité des stations de base.

Mais il peut être également être prévu de gérer les interactions entre ces stations de base afin d'optimiser la transmission du contenu audio-visuel vers les terminaux de communication, notamment en prenant en compte le fait que ceux-ci sont mobiles et peuvent donc se déplacer d'une cellule à une autre en cours de diffusion du contenu audio-visuel.

Ainsi, une pluralité de stations de base pourrait diffuser le même contenu audio-visuel. Dans le cas d'une multidiffusion (*broadcast*), celui-ci pourrait être sur une même fréquence et en synchronisme temporel.

Pour ce faire, selon un mode de réalisation, la multidiffusion comprend une constitution préalable d'un réseau à fréquence unique.

Un tel réseau à fréquence unique, ou « Single Frequency Network », SFN, est un mécanisme de transmission prévu dans le cadre du service de multidiffusion des normes de télécommunication 5G, FeMBMS (pour « *Further evolved Multimedia Broadcast Service* » en anglais).

Selon ce mécanisme, les mêmes données sont émises par plusieurs antennes (c'est-à-dire stations de base) sur une même fréquence. Les données sont en outre synchronisées temporellement, de sorte que les signaux radios se superposent et ne créent pas d'interférence. Ainsi, la qualité générale des transmissions est améliorée, notamment dans le cas de la gestion des basculement (ou « *handover* » selon la terminologie habituelle en anglais) d'une cellule à une autre d'un terminal de communication : en bord de cellule, il reçoit les multidiffusions des deux stations de base (au moins) des cellules voisines, dont les puissances s'additionnent. Le basculement à la cellule voisine ne provoque donc aucune interruption de service.

La synchronisation des signaux correspondant à ces multidiffusions peut être apportée par les stations de base qui sont naturellement synchronisées entre elles via le réseau de télécommunication.

La **figure 3** illustre une telle situation où deux stations de base 20-1, 20-2 reçoivent un même contenu audio-visuel d'un serveur de contenu 10. Ce contenu est transmis par deux flux de segments 40-10, 40-20, aux stations de base, 20-1, 20-2 respectivement.

Chacune de ces stations de base peut ensuite diffuser le contenu aux terminaux de communication servis c'est-à-dire 30-1, 30-2, 30-3 pour la station de base 20-1 et 30-4, 30-5, 30-6 pour la station de base 20-2.

Selon un mode de réalisation, le contenu audio-visuel est transmis en mode multicast depuis le serveur de contenu vers la pluralité de stations de base 20-1, 20-2.

Le multicast en 5G est une technologie de transmission de données qui permet d'envoyer des informations simultanément à plusieurs utilisateurs ou appareils connectés, en utilisant une seule transmission au lieu d'envoyer des données individuellement à chaque destinataire.

Les données sont transmises à partir d'un serveur de contenu vers un ensemble de stations de base qui forment des nœuds récepteurs à travers une structure hiérarchique appelée arbre de distribution. Chaque station de base peut se raccorder à un nœud de l'arbre de diffusion de façon à optimiser la distribution (c'est-à-dire à minimiser la redondance des transmissions au sein du réseau de télécommunication).

On combine ainsi les avantages du multicast et ceux du procédé décrit en positionnant des stations de base en tant que feuille de l'arbre de distribution. Ces deux éléments permettent donc d'améliorer encore les performances en économie de ressource en jouant sur leur synergie.

Le mécanisme décrit propose donc un procédé novateur de transmission d'un contenu, notamment d'un contenu audio-visuel très demandé, depuis un serveur de contenu vers des terminaux au travers d'un réseau cellulaire de radiocommunication mobile. Il repose notamment sur le fait que les stations de base peuvent agir en tant que nanoCDN lorsqu'elles détectent que plusieurs terminaux ont souscrit à un même contenu, et le cas échéant dans une même qualité. Ces stations de base peuvent alors broadcaster localement ce contenu, ce qui permet de décharger encore davantage les stations de base et de ne pas saturer la cellule. Ce mécanisme permet ainsi de faire face à la diffusion de contenu ayant une audience massive, comme des matchs internationaux de football par exemple, y compris pour des cellules déjà considérablement chargées.

Bien entendu, la présente invention n'est pas limitée aux exemples et au mode de réalisation décrits et représentés, mais est définie par les revendications. Elle est notamment susceptible de nombreuses variantes accessibles à l'homme de l'art.

## Revendications

1. Procédé de transmission d'un contenu audio-visuel disponible sur un serveur de contenu (10) vers un ensemble de terminaux de communication (30-1, 30-2, 30-3) à travers un réseau cellulaire de télécommunication mobile, comprenant :
- Détection par une station de base (20) qu'au moins deux terminaux de communication servis par ladite station de base consomment un même contenu audio-visuel ;
- Transmission d'une requête pour ledit contenu audio-visuel par ladite station de base audit serveur de contenu ;
- Diffusion dudit contenu audio-visuel vers lesdits au moins deux terminaux de communication.

2. Procédé selon la revendication précédente, dans lequel ladite station de base détermine si lesdits au moins deux terminaux de communication consomment ledit contenu audio-visuel dans une même qualité afin de transmettre ladite requête.

3. Procédé selon l'une des revendications précédentes, dans lequel ladite diffusion vers lesdits au moins deux terminaux de communication est une multidiffusion au sein de la cellule associée à ladite station de base.

4. Procédé selon la revendication précédente, dans lequel une pluralité de stations de base multidiffuse ledit contenu audio-visuel sur une même fréquence et en synchronisme temporel.

5. Procédé selon la revendication précédente, dans lequel la multidiffusion comprend une constitution d'un réseau à fréquence unique.

6. Procédé selon l'une des revendications 4 ou 5, dans lequel ledit contenu audio-visuel est transmis en mode multicast depuis ledit serveur de contenu vers ladite pluralité de stations de base.

7. Procédé selon l'une des revendications 3 à 6, dans lequel ladite station de base met en œuvre un contrôle d'accès à ladite multidiffusion par lesdits terminaux de communication.

8. Procédé selon l'une des revendications précédentes, dans lequel ledit contenu est un contenu correspondant à un pic de trafic, par exemple un contenu diffusé en continu.

9. Programme d'ordinateur apte à être mis en œuvre sur une station de base, le programme comprenant des instructions de code qui, lorsque ces instructions sont exécutées par un processeur, conduisent celui-ci à mettre en œuvre les étapes du procédé défini dans les revendications 1 à 8.

10. Station de base (20) pour la transmission d'un contenu audio-visuel disponible sur un serveur de contenu (10) vers un ensemble de terminaux de communication (30-1, 30-2, 30-3) à travers un réseau cellulaire de télécommunication mobile, comprenant un processeur configuré pour :
- détecter qu'au moins deux terminaux de communication servis par ladite station de base consomment un même contenu audio-visuel ;
- transmettre une requête pour ledit contenu audio-visuel audit serveur de contenu ;
- diffuser ledit contenu audio-visuel, vers lesdits au moins deux terminaux de communication.
